# FASCICULE DE BREVET EUROPEEN

(11) **EP 3 674 816 B1**
(45) Date de publication et mention de la délivrance du brevet: **27.04.2022**
(21) Numéro de dépôt: 18215840.2
(22) Date de dépôt: 24.12.2018
(51) Int. Cl.: G04B 37/22, G04B 19/12, G04B 19/04

(54) **COMPOSANT D'HABILLAGE D'HORLOGERIE OU DE BIJOUTERIE REALISE DANS UN MATERIAU COMPOSITE LOURD**
AUSSTATTUNG EINER UHR ODER EINES SCHMUCKSTÜCKS AUS EINEM SCHWEREN VERBUNDMATERIAL
EXTERNAL PART OF A TIMEPIECE OR JEWELRY MADE OF A HEAVY COMPOSITE MATERIAL

(43) Date de publication de la demande: 01.07.2020
(73) Titulaire: The Swatch Group Research and Development Ltd, 2074 Marin (CH)
(72) Inventeur: RODRIGUEZ, Pablo, 2074 Marin-Epagnier (CH); MULLER, Juliette, 2520 La Neuveville (CH); FRANCOIS, Nicolas, 2000 Neuchâtel (CH); HUSER, Julien, 2603 Péry (CH); DAHAN, Julien, 2900 Porrentruy (CH)
(74) Mandataire: ICB SA

(56) Documents cités:
- EP-A1- 2 592 498
- CH-B1- 707 298
- JP-A- S6 191 254
- JP-A- H01 234 216
- JP-A- S60 245 668
- US-A- 3 942 317

## Description

### DOMAINE TECHNIQUE

La présente invention se rapporte à un article décoratif et en particulier à un composant d'habillage en horlogerie, réalisé dans un matériau composite lourd et résistant aux chocs. Elle se rapporte également à son procédé de fabrication.

### ART ANTERIEUR

De nombreux composants d'habillage tels que les carrures et les bracelets sont réalisés dans des matériaux plastiques. Ces composants peuvent être réalisés par des procédés de moulage, ce qui présente l'avantage de pouvoir obtenir des formes diverses sans aucune opération de reprise. Ces composants en matériau plastique ont pour caractéristique d'avoir une densité voisine de 1 et donc d'être légers. Cela peut constituer un désavantage pour l'utilisateur souhaitant porter au poignet une montre présentant un certain poids.

Pour remédier à cet inconvénient, il a été proposé, par exemple dans le document EP 2 482 142, de réaliser des composants horlogers, que ce soit du mouvement ou d'habillage, dans des matériaux plastiques chargés avec une poudre métallique haute densité telle qu'une poudre de tungstène. Ces composants sont réalisés par un procédé de moulage par injection ce qui permet de garder l'avantage de la mise en forme dans le moule sans reprise ultérieure tout en augmentant la densité. Le document JP S61 91254 A divulgue une boîte de montre faite en matériau composite à haute densité comprenant une matière métallique lourde, telle que le tungstène, à hauteur de 10 à 40 %, moulée avec une matière plastique, à hauteur de 40-80%, et renforcée de fibres de carbone et de fibres de verre.

Les documents JP H01 234216 A et JP S60 245668 A divulguent encore chacun des composants d'habillage en composites lourds comprenant des métaux.

### RESUME DE L'INVENTION

La présente invention a pour objet de proposer une nouvelle composition de matière composite lourde répondant aux critères esthétiques et mécaniques, et en particulier de ténacité, des applications horlogères.

A cette fin, la présente invention propose un composant tel que caractérisé dans les revendications 1-16.

De plus, comme défini dans les revendications 17 à 25, la présente invention propose également un procédé de fabrication par moulage d'un tel composant.

Avantageusement, le matériau comprend un renfort dans un pourcentage en poids supérieur ou égal à 1% afin d'augmenter la ténacité du matériau et/ou de limiter le retrait du matériau lors du moulage. Ce renfort peut être présent sous différentes formes, par exemple, sous forme de fibres ou de particules.

Par ailleurs, le matériau peut comporter un pigment organique tel que du noir de carbone.

Le matériau composite ainsi développé a une densité comprise entre 2 et 7g/cm³ et présente une bonne ténacité.

En outre, la présente invention se rapporte au procédé de fabrication de ce matériau qui est optimisé pour assurer un mélange homogène et une bonne compatibilité entre les différents composants du matériau.

D'autres caractéristiques et avantages de la présente invention apparaîtront dans la description suivante d'un mode de réalisation préféré, présenté à titre d'exemple non limitatif en référence au dessin annexé.

### BREVE DESCRIPTION DE LA FIGURE

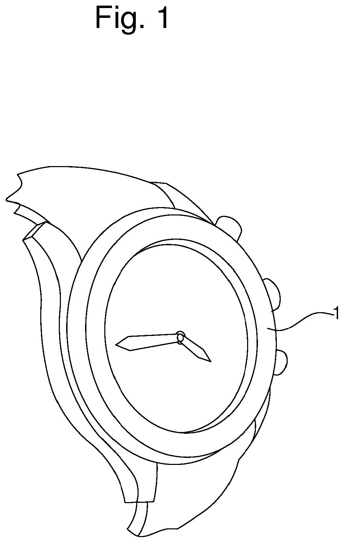

La figure 1 représente une pièce d'horlogerie comprenant une carrure réalisée avec le matériau en composite lourd selon l'invention.

### DESCRIPTION DETAILLEE

La présente invention se rapporte à un article décoratif, en particulier un composant d'habillage, réalisé dans un matériau composite comprenant une matière plastique et une matière métallique ou céramique. L'article décoratif peut être un élément constitutif de montres, bijoux, bracelets, etc. Dans le domaine horloger, cet article peut être un composant d'habillage tel qu'une carrure, un fond, une lunette, un poussoir, un maillon de bracelet, un cadran, une aiguille, un index de cadran, etc. A titre illustratif, une carrure 1 réalisée avec le matériau composite selon l'invention est représentée à la figure 1.

L'article décoratif est réalisé par moulage par injection. Le procédé de fabrication comporte les étapes consistant à:
a) Préparer des granulés de quelques millimètres comprenant en poids:
   - 60 à 90 % d'une matière métallique ou céramique ayant une densité supérieure ou égale 5 g/cm³,
   - 9 à 25% d'une résine thermoplastique ou d'un mélange de résines thermoplastiques,
   - 1 et 7% d'un agent de couplage,
   - 0 à 8 % d'un renfort, de préférence entre 1 et 6%,
   - 0 à 3 % d'un pigment,
b) Mouler par injection lesdits granulés pour former l'article décoratif. L'injection est réalisée dans un moule qui a une température de l'ordre de 90-100°C tandis que la matière lors de l'injection a une température comprise entre 200 et 300°C, et, de préférence, entre 220 et 280°C.

A l'étape a), les granulés peuvent être fabriqués par découpe d'un boudin issu de l'extrusion des matières premières susmentionnées. Avantageusement, la matière métallique ou céramique et l'agent de couplage tous deux sous forme de poudre sont introduits dans un premier temps dans une trémie de l'extrudeuse de manière à enrober la poudre métallique ou céramique avec l'agent de couplage avant d'introduire la résine thermoplastique et le renfort. Ainsi, dans un second temps, la résine thermoplastique et le renfort sont introduits par exemple latéralement dans une autre trémie de l'extrudeuse. Le pigment peut être introduit lors de l'extrusion et avantageusement dans le second temps. Il est également envisageable de le mélanger aux granulés juste avant l'injection.

La poudre métallique peut, par exemple, être une poudre d'acier conventionnel au carbone, d'acier inoxydable, de cuivre, d'un alliage de cuivre ou une poudre de tungstène. Une poudre de métaux précieux ou d'un alliage de métaux précieux typiquement d'or, d'argent, de platine peut également être envisagée. Préférentiellement, il s'agit d'une poudre d'acier inoxydable sans nickel. La poudre d'acier est préférentiellement présente dans un pourcentage en poids compris entre 60 et 80%. La poudre de tungstène est préférentiellement présente dans un pourcentage en poids compris entre 65 et 90%. Il peut également s'agir d'une poudre céramique telle qu'une poudre de ZrO₂, CeO₂, ZnO, etc. Certaines poudres céramiques peuvent présenter l'avantage d'être blanches, ce qui, en comparaison avec des poudres métalliques, facilite la coloration par les pigments. Avantageusement, la poudre métallique ou céramique est présente dans un pourcentage en poids compris entre 71 et 80%. La poudre a une granulométrie telle que d90 est inférieur ou égal à 100 µm, de préférence à 30 µm, et plus préférentiellement à 16 µm.

La résine thermoplastique peut être un polyamide, un acrylique, une polyoléfine, un polyesther, un polycarbonate, un acrylonitrile butadiène styrène, un méthylméthacrylate butadiène styrène, un acide polylactique, un polysulfure de phénylène, un polyétheréthercétone, un polyméthacrylate de méthyle, un polyoxyméthylène, teréphtalate (PBT), ainsi que des résines thermoplastiques elastomères etc., ou un mélange de ces dernières Préférentiellement, il s'agit d'un méthylméthacrylate butadiène styrène (MABS) qui est une nuance d'ABS transparent. Préférentiellement, la résine thermoplastique est introduite sous forme de poudre pour faciliter le mélange lors de la préparation des granulés. Dans le cas du MABS disponible commercialement sous forme de granulés de quelques millimètres de diamètre, une étape préalable à l'étape a) consiste à microniser les granulés pour obtenir une poudre avec un d90 inférieur ou égal à 500 µm et, de préférence, à 315 µm.

L'agent de couplage est nécessaire pour assurer une bonne accroche entre la poudre métallique ou céramique et la résine thermoplastique. Avantageusement, il s'agit d'un copolymère d'éthylène-acide méthacrylique avec un pourcentage en poids compris entre 5 et 20% d'acide méthacrylique dans le copolymère. Avantageusement, ce copolymère est utilisé en combinaison avec le MABS comme résine thermoplastique. Cet agent de couplage peut être introduit sous forme de poudre avec un d90 inférieur ou égal à 500 µm et, de préférence, à 315 µm.

Le renfort peut être présent sous différentes formes, par exemple, sous forme de fibres ou de particules. Par exemple, il peut s'agir de fibres de verre, de billes de verre, de fibres de carbone et/ou de fibres d'aramide avec une longueur de fibres inférieure ou égale à 300 µm, et, de préférence, à 200 µm. Il a pour objet d'améliorer la ténacité du matériau et/ou de limiter le retrait de la matière lors de l'injection.

Le pigment est préférentiellement un pigment organique ayant un pouvoir de coloration de la poudre métallique ou céramique plus important que les pigments inorganiques. Par exemple, il peut s'agir du noir de carbone pour le noir, du dicétopyrrolopyrrole pour le rouge (par ex. Irgazin Red K3840LW de BASF), du phthalocyanine de cuivre pour le bleu (par ex. Heliogen Blue K7096 de BASF), d'un pigment monoazo pour le jaune (par ex. Paliotol Yellow K1760 de BASF), etc. Selon une variante, le pigment peut être fluroescent et/ou phosphorescent.

L'article ainsi obtenu comporte une matière métallique ou céramique et une matière plastique, aussi dite synthétique, comprenant la résine thermoplastique, l'agent de couplage et un éventuel produit issu de la réaction entre la résine et l'agent de couplage lors de l'extrusion ou de l'injection. Il comporte également le renfort et le pigment, si pigment et renfort il y a.

A titre d'exemple, des essais ont été réalisés pour fabriquer par injection des carrures partant de granulés cylindriques ayant un diamètre et une longueur respectivement de l'ordre de 3 mm. Les granulés comprennent un mélange homogène en poids de 72% de poudre d'acier inoxydable sans Ni (Fe17Cr11Mn3Mo) de Carpenter ayant un d90<16 µm, de 18.5% de MABS (Terlux 2802) micronisés avec un d90<315 µm, de 3.5% d'éthylène-acide méthacrylique avec 15% d'acide (Coathylene RP 9065-34), de 6% de fibres de verre de 200 µm de long (Glasfasser-Flocken de Suter-Kunststoffe AG). Un autre mélange présentant les mêmes pourcentages de MABS et d'agent de couplage mais avec 71% d'acier inoxydable et 1% de noir de carbone (Printex 55 noir) a été préparé.

Le rendu esthétique des carrures est bon avec une couleur grise pour la composition sans pigment et une couleur noire pour celle avec le pigment. Les carrures ainsi obtenues ont une densité de 3.05 g/cm³ pour la version grise et de 3 g/cm³ pour la version noire. Des essais de résilience par chocs au mouton pendule suivis de tests d'étanchéité sur les carrures intégrées à des boîtiers ont par ailleurs démontré la bonne ténacité des carrures réalisées avec la composition susmentionnée.

## Revendications

1. Composant d'habillage d'horlogerie ou de bijouterie réalisé dans un matériau moulé ayant une densité comprise entre 2 et 7 g/cm³, le matériau moulé comprenant en poids :
- 60 à 90% d'une céramique ayant une densité supérieure ou égale à 5 g/cm³,
- 10 à 32% d'une matière plastique comprenant une résine thermoplastique ou un mélange de résines thermoplastiques et un agent de couplage,
- 0 à 8% d'un renfort,
- 0 à 3% d'un pigment.

2. Composant d'habillage d'horlogerie ou de bijouterie réalisé dans un matériau moulé ayant une densité comprise entre 2 et 7 g/cm³, le matériau moulé comprenant en poids :
- 60 à 90% d'un métal précieux ou d'un alliage de métaux précieux ayant une densité supérieure ou égale à 5 g/cm³,
- 10 à 32% d'une matière plastique comprenant une résine thermoplastique ou un mélange de résines thermoplastiques et un agent de couplage,
- 0 à 8% d'un renfort,
- 0 à 3% d'un pigment.

3. Composant selon la revendication 1, **caractérisé en ce que** la matière céramique est un oxyde de zinc, un oxyde de zirconium ou un oxyde de cérium.

4. Composant selon l'une quelconque des revendications précédentes, **caractérisé en ce que** la matière métallique ou céramique est présente dans un pourcentage en poids compris entre 71 et 80%.

5. Composant selon l'une quelconque des revendications précédentes, **caractérisé en ce que** la résine thermoplastique est choisie parmi la liste comprenant un polyamide, un acrylique, une polyoléfine, un polyesther, un polycarbonate, un acrylonitrile butadiène styrène, un méthylméthacrylate butadiène styrène, un acide polylactique, un polysulfure de phénylène, un polyétheréthercétone, un polyméthacrylate de méthyle et un polyoxyméthylène, un polyuréthane.

6. Composant selon l'une quelconque des revendications précédentes, **caractérisé en ce que** la résine thermoplastique est le méthylméthacrylate butadiène styrène.

7. Composant selon l'une quelconque des revendications précédentes, **caractérisé en ce que** la résine thermoplastique est présente dans un pourcentage en poids par rapport au matériau moulé compris entre 15 et 20%.

8. Composant selon l'une quelconque des revendications précédentes, **caractérisé en ce que** l'agent de couplage est un copolymère d'éthylène-acide méthacrylique.

9. Composant selon la revendication 8, **caractérisé en ce que** l'acide méthacrylique est présent dans un pourcentage en poids compris entre 5 et 20% dans le copolymère.

10. Composant selon l'une quelconque des revendications précédentes, **caractérisé en ce que** le renfort est formé de fibres de verre, de billes de verre, de fibres de carbone et/ou de fibres d'aramide.

11. Composant selon l'une quelconque des revendications précédentes, **caractérisé en ce que** le renfort est présent dans un pourcentage en poids compris entre 1 et 6%.

12. Composant selon l'une quelconque des revendications précédentes, **caractérisé en ce que** le pigment est organique.

13. Composant selon la revendication 12, **caractérisé en ce que** le pigment est fluroescent et/ou phosphorescent.

14. Composant selon l'une quelconque des revendications précédentes, **caractérisé en ce qu'**il s'agit d'un composant d'habillage en horlogerie choisi parmi la liste comprenant une carrure, un fond, une lunette, un poussoir, un maillon de bracelet, un cadran, une aiguille et un index de cadran.

15. Composant d'habillage d'horlogerie ou de bijouterie réalisé dans un matériau moulé ayant une densité comprise entre 2 et 7 g/cm³, le matériau moulé comprenant en poids :
- 72% de poudre d'acier inoxydable sans Ni (Fe17Cr11Mn3Mo) ayant un d90<16 µm,
- 18.5% de MABS (méthyle méthacrylate acrylonitrile butadiène sytrène) micronisés avec un d90<315 µm,
- 3,5% d'éthylène-acide méthacrylique avec 15% d'acide, et
- 6% de fibres de verre de 200 µm de long.

16. Composant d'habillage d'horlogerie ou de bijouterie réalisé dans un matériau moulé ayant une densité comprise entre 2 et 7 g/cm³, le matériau moulé comprenant en poids :
- 72% de poudre d'acier inoxydable sans Ni (Fe17Cr11Mn3Mo) ayant un d90<16 µm,
- 18.5% de MABS (méthyle méthacrylate acrylonitrile butadiène sytrène) micronisés avec un d90<315 µm,
- 3,5% d'éthylène-acide méthacrylique avec 15% d'acide,
- 6% de fibres de verre de 200 µm de long, et
- 1% de noir de carbone.

17. Procédé de fabrication d'un composant d'habillage d'horlogerie ou de bijouterie selon l'une des revendications précédentes comprenant les étapes successives consistant à :
a) Préparer des granulés comprenant
- 60 à 90 % d'un matériau métallique ou céramique ayant une densité supérieure ou égale à 5 g/cm³,
- 9 à 25% d'une résine thermoplastique,
- 1 à 7% d'un agent de couplage,
- 0 à 8 % d'un renfort,
- 0 à 3 % d'un pigment,
b) Mouler par injection lesdits granulés pour former l'article décoratif.

18. Procédé selon la revendication 17, **caractérisé en ce que** la résine thermoplastique est un méthylméthacrylate butadiène styrène.

19. Procédé selon la revendication 18, **caractérisé en ce que** le méthylméthacrylate butadiène styrène est sous forme de poudre avec un d90 inférieur ou égal à 500 µm, de préférence à 315 µm.

20. Procédé selon la revendication 18 ou 19, **caractérisé en ce que** le pourcentage en poids de méthylméthacrylate butadiène styrène est compris entre 15 et 25% en poids, de préférence entre 15 et 20%.

21. Procédé selon l'une quelconque des revendications 17 à 20, **caractérisé en ce que** l'agent de couplage est un copolymère d'éthylène-acide méthacrylique sous forme de poudre avec un d90 inférieur ou égal à 500 µm, de préférence à 315 µm.

22. Procédé selon l'une quelconque des revendications 17 à 21, **caractérisé en ce que** la poudre métallique ou céramique a un d90 inférieur ou égal à 100 µm, de préférence à 30 µm, et plus préférentiellement à 16 µm.

23. Procédé selon l'une quelconque des revendications 17 à 22, **caractérisé en ce que** le renfort est sous forme de fibres ayant une longueur inférieure ou égale à 300 µm, de préférence à 200 µm.

24. Procédé selon la revendication 17, **caractérisé en ce que** l'étape a) réalisée par extrusion consiste à introduire, dans un premier temps, dans une trémie d'une extrudeuse une poudre du matériau métallique ou céramique et une poudre de l'agent de couplage et, dans un second temps, dans une autre trémie latérale de l'extrudeuse la résine thermoplastique et le renfort de manière à enrober la poudre du matériau métallique ou céramique avec l'agent de couplage avant d'introduire la résine thermoplastique et le renfort.

25. Procédé selon la revendication 24, **caractérisé en ce que** le pigment est introduit dans l'autre trémie latérale ou lors du moulage par injection.

## Patentansprüche

1. Ausstattungskomponente für die Uhrmacherei oder Juwelierwaren aus einem gegossenen Werkstoff, der eine Dichte aufweist, die zwischen 2 und 7 g/m³ liegt, wobei der gegossene Werkstoff auf das Gewicht bezogen umfasst:
- 60 bis 90 % einer Keramik, die eine Dichte größer oder gleich 5 g/cm³ aufweist;
- 10 bis 32 % eines Plastikmaterials, das ein thermoplastisches Harz oder ein Gemisch an thermoplastischen Harzen und ein Kupplungsmittel umfasst,
- 0 bis 8 % einer Verstärkung,
- 0 bis 3 % eines Pigments.

2. Ausstattungskomponente für die Uhrmacherei oder Juwelierwaren aus einem gegossenen Werkstoff, der eine Dichte aufweist, die zwischen 2 und 7 g/m³ liegt, wobei der gegossene Werkstoff auf das Gewicht bezogen umfasst:
- 60 bis 90 % eines Edelmetalls oder einer Legierung aus Edelmetallen, das/die eine Dichte größer oder gleich 5 g/cm³ aufweist;
- 10 bis 32 % eines Plastikmaterials, das ein thermoplastisches Harz oder ein Gemisch an thermoplastischen Harzen und ein Kupplungsmittel umfasst,
- 0 bis 8 % einer Verstärkung,
- 0 bis 3 % eines Pigments.

3. Komponente nach Anspruch 1, **dadurch gekennzeichnet, dass** das Keramikmaterial ein Zinkoxid, ein Zirkoniumoxid oder ein Ceroxid ist.

4. Komponente nach einem der vorstehenden Ansprüche, **dadurch gekennzeichnet, dass** das Metall- oder Keramikmaterial in einem Gewichtsprozentanteil vorhanden ist, der zwischen 71 und 80 % liegt.

5. Komponente nach einem der vorstehenden Ansprüche, **dadurch gekennzeichnet, dass** das thermoplastische Harz aus der Liste ausgewählt ist, die ein Polyamid, ein Acryl, ein Polyolefin, ein Polyerster, ein Polycarbonat, ein Acrylnitril-Butadien-Styrol, ein Methylmethacrylat-Butadien-Styrol, eine Polymilchsäure, ein Polyphenylensulfid, ein Polyetheretherketon, ein Methylpolymethacrylat und ein Polyoxymethylen, ein Polyurethan umfasst.

6. Komponente nach einem der vorstehenden Ansprüche, **dadurch gekennzeichnet, dass** das thermoplastische Harz das Methylmethacrylat-Butadien-Styrol ist.

7. Komponente nach einem der vorstehenden Ansprüche, **dadurch gekennzeichnet, dass** das thermoplastische Harz in einem Gewichtsprozentanteil in Bezug auf den gegossenen Werkstoff vorhanden ist, der zwischen 15 und 20 % liegt.

8. Komponente nach einem der vorstehenden Ansprüche, **dadurch gekennzeichnet, dass** das Kupplungsmittel ein Ethylen-Methacrylsäure Copolymer ist.

9. Komponente nach Anspruch 8, **dadurch gekennzeichnet, dass** die Methacrylsäure in einem Gewichtsprozentanteil, der zwischen 5 und 20 % liegt, in dem Copolymer vorhanden ist.

10. Komponente nach einem der vorstehenden Ansprüche, **dadurch gekennzeichnet, dass** die Verstärkung aus Glasfasern, Glaskugeln, Carbonfasern und/oder Aramidfasern gebildet wird.

11. Komponente nach einem der vorstehenden Ansprüche, **dadurch gekennzeichnet, dass** die Verstärkung in einem Gewichtsprozentanteil vorhanden ist, der zwischen 1 und 6 % liegt.

12. Komponente nach einem der vorstehenden Ansprüche, **dadurch gekennzeichnet, dass** das Pigment organisch ist.

13. Komponente nach Anspruch 12, **dadurch gekennzeichnet, dass** das Pigment fluoreszierend und/oder phosphorisierend ist.

14. Komponente nach einem der vorstehenden Ansprüche, **dadurch gekennzeichnet, dass** es sich um eine Ausstattungskomponente für die Uhrmacherei handelt, die aus der Liste ausgewählt ist, die einen Mittelteil, einen Boden, eine Lunette, einen Drücker, ein Armbandkettenglied, ein Zifferblatt, einen Zeiger und einen Zifferblattindex umfasst.

15. Ausstattungskomponente für die Uhrmacherei oder Juwelierwaren aus einem gegossenen Werkstoff, der eine Dichte aufweist, die zwischen 2 und 7 g/m³ liegt, wobei der gegossene Werkstoff auf das Gewicht bezogen umfasst:
- 72 % an nichtrostendem Stahlpulver ohne Ni (Fe17Cr11Mn3Mo), das einen d90<16 µm aufweist,
- 18,5% an MABS (Methylmetacrylat-Acrylnitril-Butadien-Styrol), die mit einem D90<315 µm mikronisiert sind,
- 3,5 % an Ethylen-Methacrylsäure mit 15 % Säure, und
- 6 % an Glasfasern, die 200 µm lang sind.

16. Ausstattungskomponente für die Uhrmacherei oder Juwelierwaren aus einem gegossenen Werkstoff, der eine Dichte aufweist, die zwischen 2 und 7 g/m³ liegt, wobei der gegossene Werkstoff auf das Gewicht bezogen umfasst:
- 72 % an nichtrostendem Stahlpulver ohne Ni (Fe17Cr11Mn3Mo), das einen d90<16 µm aufweist;
- 18,5% an MABS (Methylmetacrylat-Acrylnitril-Butadien-Styrol), die mit einem D90<315 µm mikronisiert sind,
- 3,5 % an Ethylen-Methacrylsäure mit 15 % Säure,
- 6 % an Glasfasern, die 200 µm lang sind,
- 1 % an Ruß.

17. Verfahren zur Herstellung einer Ausstattungskomponente für die Uhrmacherei oder Juwelierwaren nach einem der vorstehenden Ansprüche, das die aufeinanderfolgenden Schritte umfasst, bestehend aus:
a) Vorbereiten der Körner, umfassend
- 60 bis 90 % eines Metall- oder Keramikwerkstoffs, der eine Dichte größer oder gleich 5 g/cm³ aufweist;
- 9 bis 25 % eines thermoplastischen Harzes,
- 1 bis 7 % eines Kupplungsmittels,
- 0 bis 8 % einer Verstärkung,
- 0 bis 3 % eines Pigments,
b) Spritzgießen der Körner zur Bildung des Ausstattungsartikels.

18. Verfahren nach Anspruch 17, **dadurch gekennzeichnet, dass** das thermoplastische Harz ein Methylmetacrylat-Butadien-Styrol ist.

19. Verfahren nach Anspruch 18, **dadurch gekennzeichnet, dass** das Methylmetacrylat-Butadien-Styrol in Form eines Pulvers mit einem d90 kleiner oder gleich 500 µm, vorzugsweise 315 µm ist.

20. Verfahren nach Anspruch 18 oder 19, **dadurch gekennzeichnet, dass** der Gewichtsprozentanteil an Methylmetacrylat-Butadien-Styrol zwischen 15 und 25 Gew.-%, vorzugsweise zwischen 15 und 20 % liegt.

21. Verfahren nach einem der Ansprüche 17 bis 20, **dadurch gekennzeichnet, dass** das Kupplungsmittel ein Ethylen-Methacrylsäure Copolymer in Form eines Pulvers mit einem d90 kleiner oder gleich 500 µm, vorzugsweise 315 µm ist.

22. Verfahren nach einem der Ansprüche 17 bis 21, **dadurch gekennzeichnet, dass** das Metall- oder Keramikpulver einen d90 kleiner oder gleich 100 µm, vorzugsweise 30 µm, und noch bevorzugter 16 µm aufweist.

23. Verfahren nach einem der Ansprüche 17 bis 22, **dadurch gekennzeichnet, dass** die Verstärkung in Form von Fasern ist, die eine Länge kleiner oder gleich 300 µm, vorzugsweise 200 µm aufweisen.

24. Verfahren nach Anspruch 17, **dadurch gekennzeichnet, dass** Schritt a), der durch Extrusion ausgeführt wird, darin besteht, zuerst in einen Trichter eines Extruders ein Pulver des Metall- oder Keramikwerkstoffes und ein Pulver des Kupplungsmittels einzubringen, und zu einem späteren Zeitpunkt in einen anderen seitlichen Trichter des Extruders das thermoplastische Harz und die Verstärkung derart einzubringen, um das Pulver des Metall- oder Keramikwerkstoffes mit dem Kupplungsmittel zu umhüllen, bevor das thermoplastische Harz und die Verstärkung eingebracht werden.

25. Verfahren nach Anspruch 24, **dadurch gekennzeichnet, dass** das Pigment in den anderen seitlichen Trichter oder beim Spritzgießen eingebracht wird.

## Claims

1. An external part of a timepiece or jewelry made from a moulded material having a density comprised between 2 and 7 g/cm³, the moulded material comprising by weight:
- 60 to 90% of a ceramic having a density higher than or equal to 5 g/cm³,
- 10 to 32% of a plastic material including a thermoplastic resin or a mixture of thermoplastic resins and a coupling agent,
- 0 to 8% of a reinforcement,
- 0 to 3% of a pigment.

2. An external part of a timepiece or jewelry made from a moulded material having a density comprised between 2 and 7 g/cm³, the moulded material comprising by weight:
- 60 to 90% of a precious metal or a precious metal alloy having a density higher than or equal to 5 g/cm³,
- 10 to 32% of a plastic material including a thermoplastic resin or a mixture of thermoplastic resins and a coupling agent,
- 0 to 8% of a reinforcement,
- 0 to 3% of a pigment.

3. The part according to claim 1, **characterised in that** the ceramic material is a zinc oxide, a zirconium oxide or a cerium oxide.

4. The part according to any one of the preceding claims, **characterised in that** the metallic or ceramic material is present in a weight percentage comprised between 71 and 80%.

5. The part according to any one of the preceding claims, **characterised in that** the thermoplastic resin is chosen from the list including a polyamide, an acrylic, a polyolefin, a polyester, a polycarbonate, an acrylonitrile butadiene styrene, a methyl methacrylate butadiene styrene, a polylactic acid, a phenylene polysulphide, a polyetheretherketone, a methyl polymethacrylate and a polyoxymethylene, a polyurethane.

6. The part according to any one of the preceding claims, **characterised in that** the thermoplastic resin is methyl methacrylate butadiene styrene.

7. The part according to any one of the preceding claims, **characterised in that** the thermoplastic resin is present in a weight percentage relative to the moulded material comprised between 15 and 20%.

8. The part according to any one of the preceding claims, **characterised in that** the coupling agent is an ethylene-methacrylic acid copolymer.

9. The part according to claim 8, **characterised in that** the methacrylic acid is present in a weight percentage comprised between 5 and 20% in the copolymer.

10. The part according to any one of the preceding claims, **characterised in that** the reinforcement is formed of glass fibres, glass beads, carbon fibres and/or aramid fibres.

11. The part according to any one of the preceding claims, **characterised in that** the reinforcement is present in a weight percentage comprised between 1 and 6%.

12. The part according to any one of the preceding claims, **characterised in that** the pigment is organic.

13. The part according to claim 12, **characterised in that** the pigment is fluorescent and/or phosphorescent.

14. The part according to any one of the preceding claims, **characterised in that** it consists of an external part of a timepiece chosen from the list including a case middle, a case back, a bezel, a push-piece, a bracelet link, a dial, a dial hand and a dial index.

15. An external part of a timepiece or jewelry made from a moulded material having a density comprised between 2 and 7 g/cm³, the moulded material comprising by weight:
- 72% of stainless steel powder without Ni (Fe17Cr11Mn3Mo) having a d90<16 µm,
- 18.5% of MABS (methyl methacrylate acrylonitrile butadiene styrene) micronised with a d90<315 µm,
- 3.5 % of ethylene-methacrylic acid with 15% acid, and
- 6% of 200 µm long glass fibers.

16. An external part of a timepiece or jewelry made from a moulded material having a density comprised between 2 and 7 g/cm³, the moulded material comprising by weight:
- 72% of stainless steel powder without Ni (Fe17Cr11Mn3Mo) having a d90<16 µm,
- 18.5% of MABS (methyl methacrylate acrylonitrile butadiene styrene) micronised with a d90<315 µm,
- 3.5 % of ethylene-methacrylic acid with 15% acid,
- 6% of 200 µm long glass fibers, and
- 1% of carbon black.

17. A method for manufacturing an external part of a timepiece or jewelry according to one of the preceding claims including the successive steps consisting in:
a) Preparing granules containing
- 60 to 90% of a metallic or ceramic material having a density higher than or equal to 5 g/cm³,
- 9 to 25% of a thermoplastic resin,
- 1 to 7% of a coupling agent,
- 0 to 8% of a reinforcement,
- 0 to 3% of a pigment,
b) Injection moulding said granules to form the external part.

18. The method according to claim 17, **characterised in that** the thermoplastic resin is a methyl methacrylate butadiene styrene.

19. The method according to claim 18, **characterised in that** the methyl methacrylate butadiene styrene is in powder form with a d90 of less than or equal to 500 µm, preferably less than or equal to 315 µm.

20. The method according to claim 18 or 19, **characterised in that** the weight percentage of methyl methacrylate butadiene styrene is comprised between 15 and 25 wt%, preferably between 15 and 20 wt%.

21. The method according to any one of claims 17 to 20, **characterised in that** the coupling agent is an ethylene-methacrylic acid copolymer in powder form with a d90 of less than or equal to 500 µm, preferably less than or equal to 315 µm.

22. The method according to any one of claims 17 to 21, **characterised in that** the metallic or ceramic powder has a d90 of less than or equal to 100 µm, preferably less than or equal to 30 µm, and more preferably to 16 µm.

23. The method according to any one of claims 17 to 22, **characterised in that** the reinforcement is in the form of fibres having a length of less than or equal to 300 µm, preferably less than or equal to 200 |jm.

24. The method according to claim 17, **characterised in that** step a) performed by extrusion consists in introducing, firstly, a metallic or ceramic material powder and a coupling agent powder into an extruder hopper and, secondly, the thermoplastic resin and the reinforcement into another lateral hopper of the extruder in order to coat the metallic or ceramic material powder with the coupling agent before introducing the thermoplastic resin and the reinforcement.

25. The method according to claim 24, **characterised in that** the pigment is introduced into the other lateral hopper or during the injection moulding process.
